# EUROPEAN PATENT SPECIFICATION

(11) **EP 3 038 864 B1**
(45) Date of publication and mention of the grant of the patent: **09.01.2019**
(21) Application number: 14841079.8
(22) Date of filing: 29.08.2014
(51) Int. Cl.: B60R 22/10, B64D 25/06, A61G 1/04

(54) **PROTECTION ARRANGEMENT FOR VEHICLE TRANSPORT OF INFANTS**
SCHUTZANORDNUNG FÜR FAHRZEUGTRANSPORT VON KINDERN
DISPOSITIF DE PROTECTION POUR LE TRANSPORT DE BÉBÉS DANS UN VÉHICULE

(30) Priority: 30.08.2013 SE 1351015
(43) Date of publication of application: 06.07.2016
(73) Proprietor: AB Germa, 291 02 Kristianstad (SE)
(72) Inventor: JOHANSSON, Pär, S-184 61 Åkersberga (SE)
(74) Representative: Ström & Gulliksson AB
(86) International application number: PCT/SE2014/050999
(87) International publication number: WO 2015/030668

(56) References cited:
- EP-A1- 0 447 098
- EP-A1- 1 147 717
- DD-A1- 147 815
- FR-A1- 2 660 184
- JP-A- 2005 185 426
- US-A- 4 234 229
- US-A- 5 379 725
- US-A- 5 628 548
- US-A1- 2009 212 549
- US-B1- 7 131 703

## Description

### Technical field

The present disclosure relates to protection arrangements for protecting infants at vehicle transport, especially to arrangements for securing newborn infants in emergency vehicles.

### Background

When transporting infants in vehicles, the infants are commonly seated in infant seats or child car seats.

At home birth, the newly delivered mother and the newborn infant are commonly transported to a hospital for medical care, e.g. after birth of the placenta, and medical monitoring. They are then often transported by ambulance.

Usual stretchers of ambulances are not adapted to transport a newborn in a safe way. Today, newborn infants are therefore often wrapped in a towel or blanket and hold in the arms of the mother or another person when being transported to the hospital. There is then a risk that the mother will drop the wrapped infant during avoidance manoeuvres or braking of the ambulance. The infant may further slip out of the towel of blanket.

Due to the considerable amount of medical equipment in ambulances and the fact the medical personal require working space for medial care of patients, it is not desirable to occupy further space in the ambulances for storing separate infant seats or child car seats.

The patent publications US5628548, DD147815A1 and US4234229A1 disclose known arrangements for transporting children on a person's body, when the person is seated and wears a seat belt.

US7131703 shows a safety west for a child that is seated in the backseat of a car with the face in the driving direction. The rear side of the west comprises slot formed openings and flaps that are arranged to receive and separate the lap belt and the shoulder belts of the safety belt in the backseat.

However, none of these publications are directed to and are also not suitable for medical transportation of infants.

Sometimes the infant and the mother may be transported in separate ambulances to the hospital, the infant in an ordinary child care seat in a first ambulance and the mother at a stretcher in a second ambulance. The amount of ambulances and medical personal is often limited and sending two ambulances results in an ineffective use of medical resources.

Furthermore, because infants and especially newborn babies are small and fragile, it is not optimal to seat them in baby car seats and get seat belt attached.

Thus, there is a need for increasing security for infants and babies at vehicle transport.

### Summary

It would be desirable to obtain improved security when transporting infants. It is an object of this disclosure to address at least one of the issues outlined above.

Further, it is an object to provide a mechanism for transporting infants securely. These objects may be met by an arrangement according to the attached independent claims.

According to one aspect, an infant harness means is provided, as further disclosed in claim 1, to be attached to a safety belt arrangement for enabling vehicle transport of an infant on a person's body when the person is seated in a seat or a stretcher of a vehicle, such as an ambulance. The person is fastened to the seat or stretcher with a seat belt. The infant harness means comprises a middle portion, at least a first and a second tab extending from the middle portion. The infant harness means is adapted to at least partly encompass the body of the infant when folded around the body of the infant, and an end part of the first tab is fixated to an end part of the second tab. The infant harness means comprises further a harness attachment means which is arranged on a first side of the infant harness means, for attachment of the infant harness means to a corresponding attachment means of the safety belt arrangement, the safety belt arrangement means being adapted to be connectable to the seat belt of the person being seated in the seat or stretcher. By providing the at least two tabs, the size of the infant harness may be flexibly adjusted to fit different infant body sizes, and by providing the harness attachment means, the infant harness means may by attached to the safety belt arrangement. Thereby, the infant which is encompassed in the infant harness means may be reliably secured to the body of the seated person.

Furthermore, the infant harness comprises a pocket which is adapted to receive a neck stabilizer. By arranging the neck stabilizer at the infant harness means the infants head may be supported. I addition the neck stabilizer may also support the infants back during transport.

According to another aspect, an infant protection arrangement is provided which comprises the infant harness means and the safety belt arrangement.

Furthermore, the infant protection arrangement may comprise a protection coverage which is adapted to be arranged between the infant harness means and the safety belt arrangement. By arranging protection coverage such that it at least partly covers the infant harness means and an infant, the infant may be protected from injuries and the infant's body temperature may be kept normal during transport.

By encompassing the body of an infant in an infant harness means and attach the infant harness means to a safety belt arrangement, the infant may be secured to the seat belt of a seated person who is fastened by the seat belt to a seat or stretcher. Thereby, the infant may be securely transported on the body of the person.

### Brief description of drawings

The solution will now be described in more detail by means of exemplary embodiments and with reference to the accompanying drawings, in which:
- Figure 1: is a schematic environmental illustration of an arrangement, according to a possible embodiment.
- Figures 2a-d: are schematic illustrations of an infant harness means, according to possible embodiments.
- Figure 3: is a schematic illustration of an infant protection arrangement according to a possible embodiment.
- Figure 4: is a schematic illustration of an infant protection arrangement according to a possible embodiment.
- Figure 5: is a schematic environmental illustration of an arrangement, according to a possible embodiment.

### Detailed description

When transporting infants in vehicles, the infants need to be securely fastened after being seated in infant seats of child car seats.

At home birth, the mother and the newborn baby are commonly transported to a hospital for after birth, medical care and monitoring. For newborn infants or babies, the experience of being separated from the parent may give rise to frustrating or scaring feelings for the infant or baby, who is used to be close to the parent.

Newborn babies require proximity to the mother to feel safe, and a transport solution where the infant will be secured to the mother is provided.

It is also recommended by medical authorities to not separate a newborn infant from its mother and to not cut the umbilical cord before arriving to the hospital.

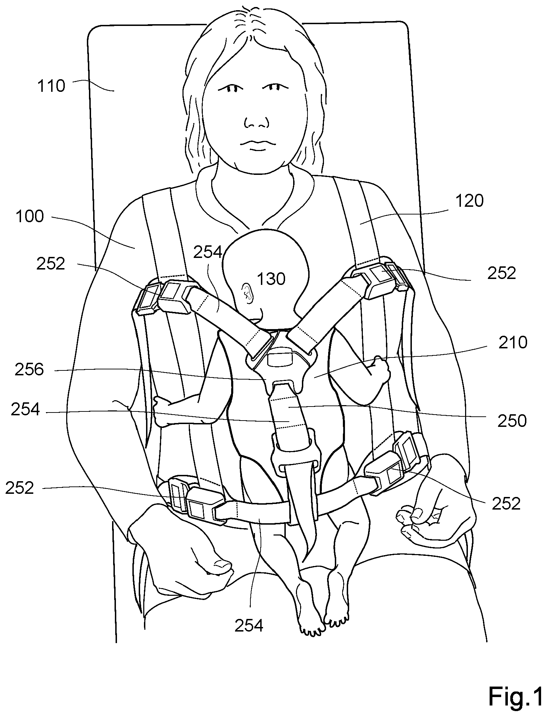

With reference to Figure 1, which is a schematic overview, a scenario where an infant is transported in a vehicle will now be described in accordance with one exemplifying embodiment.

In a vehicle a person 100 and an infant 130 is transported in the vehicle, e.g. a newborn infant and its newly delivered mother is transported in an ambulance. The person 100 is seated on a stretcher 110 and fastened to the stretcher with a seat belt 120 of the stretcher 110. The infant 130 is encompassed in an infant harness means 210 and is secured to the body of the person 100 by a safety belt arrangement means 250 which is connected to the seat belt 120 of the person. The safety belt arrangement means 250 comprises four belt attachment parts 252 which are fastened to different respective positions of the seat belt 120. In this exemplifying embodiment, the belt attachment parts 252 are implemented as belt buckles and respective short belt parts, which are attached to the seat belt 120 by guiding the short belt part around the seat belt and closing the belt buckles 252. As seen in the figure, the belt attachment parts 252 are attached to the seat belt 120 at different respective positions.

In an alternative embodiment, which is based on the one described above, the safety belt attachment means 250 comprises further components, such as a quick-release buckle 256, which enables the safety belt arrangement means 250 to be opened fast. Thereby, the infant 130 may be fast released from the seat belt 120 without removing the belt arrangement means 250 from the seat belt 120, which may be of importance in emergency situations.

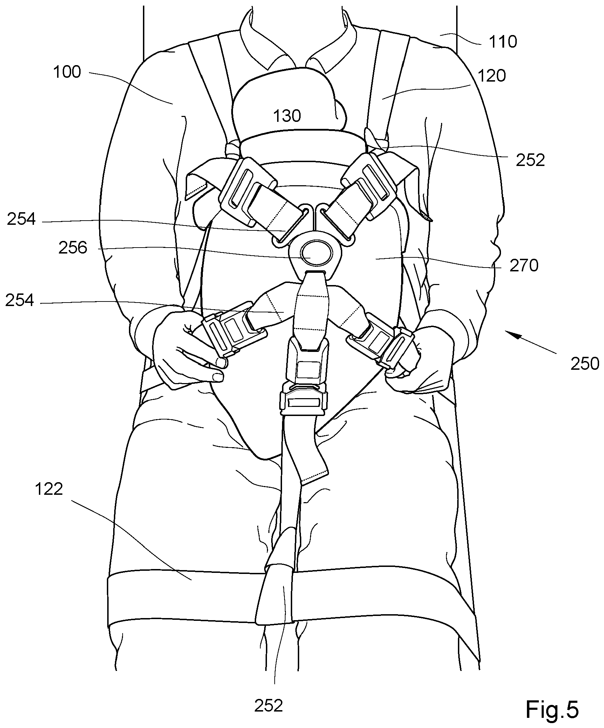

The safety belt attachment means 250 may further comprise adjustment buckles to adjust the size of the safety belt attachment means 250 to the size of the infant 130. Such adjustment buckles may be arranged at any appropriate of the belt parts 254. An alternative implementation of the safety belt attachment means 250 will be described below in conjunction with figure 5 in another exemplifying embodiment.

In the described embodiment, the person is seated at a stretcher. However, the disclosed concept is not limited thereto, and a designer may select to apply the infant harness means and safety belt attachment means also in other types of vehicles. For instance, the person may be seated in a vehicle seat and the safety belt attachment means may be attached to the seat belt of the seat. It is also to be noted that a designer may implement the safety belt attachment means 250 alternatively within the described concept, for instance may the safety belt arrangement 250 be implemented as two belt attachment means 252 interconnected by one belt part 254. It is also to be noted that the belt attachment means 252 may be implemented alternatively within the disclosed concept. For instance, the belt attachment means may be implemented as Velcro areas, snap buttons, attachment clamps or clips, etc. The belt parts 254 may further be tied around the seat belt 120.

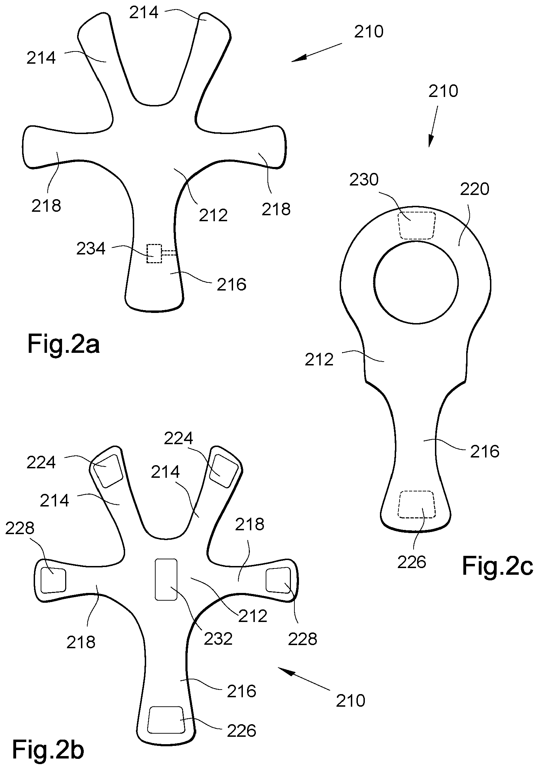

With reference to Figures 2a-c, which are schematic illustrations, various designs of infant harness means 210 will now be described in accordance with some exemplifying embodiments.

A first side of an infant harness means 210 is illustrated in figure 2a, and comprises a middle part 212 and a plurality of tabs 214, 216, 218 extending from the middle part 212. When an infant, e.g. a newborn baby will be transported, the infant is placed on its back on the middle part 212, and the tabs 214, 216, 218 are folded around the body of the infant. In this embodiment, the tabs 214, 216, 218 are implemented as two shoulder tabs 214, one leg tab 216, and two side tabs 218. The shoulder tabs 214 are folded over the shoulders of the infant, the leg tab 216 is folded between the legs of the infant, and the side tabs 218 are folded over the torso of the infant.

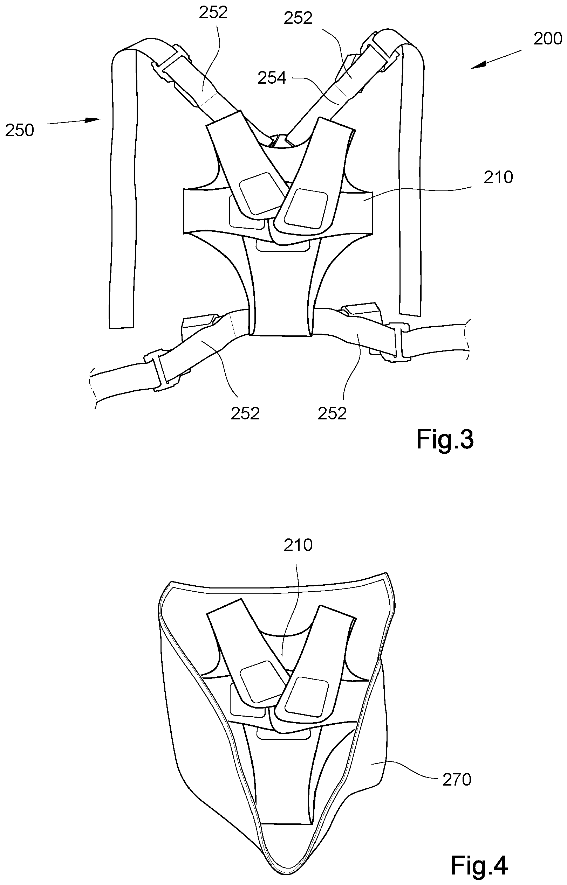

The disclosed infant harness means 210 is further disclosed with reference to figure 2b, where a second side, opposite to the first side, is illustrated. The second side will be the outside of the infant harness means when the tabs 214, 216, 218 have been folded around the body of the infant. Where the same parts are illustrated in the figures 2a and 2b, the same reference numbers are applied to facilitate the understanding. As seen in the figure 2b, each of the tabs 214, 216, 218 is provided with a respective closing means 224, 226, 228 at their end parts. The closing means 224, 226, 228 are in this embodiment implemented as Velcro areas. These Velcro areas are arranged to attach to first sides of another one of the plurality of tabs 214, 216, 218, such that the torso of the infant is partly encompassed in the infant harness means 210. By closing the infant harness means 210, openings are achieved for the infant's head, arms, and legs, which may further be seen in figure 3, below. It is to be noted that the disclosed concept is not limited to applying Velcro areas as closing means, and that any other suitable arrangement may be used instead where appropriate, e.g. push buttons, tape stripes, etc.

The infant harness means 210 is further provided by a harness attachment means 232 arranged on the middle portion 212 on the second side, i.e. the side which will be the outside when the tabs 214, 216, 218 are folded around the infant's body. By arranging the harness attachment means 232 at the middle portion 212, the harness attachment means 232 will attach to a corresponding attachment means of the safety belt arrangement 250, which prevents the infant harness means 210 from being dropped from the person, e.g. at sudden manoeuvres by the driver of the vehicle. Thereby the security for the infant will be further increased. In this exemplifying embodiment, the harness attachment means 232 is implemented as a Velcro area, which is arranged on the outside of the infant harness means 210 to be releasable attached to a corresponding Velcro area of the safety belt arrangement 250 abutting the harness attachment means 232. It is to be noted that the attachment means 232 may by alternatively arranged within the disclosed concept. For instance, the attachment means 232 may be arranged at any suitable positions of the infant harness means 210, to attach to corresponding attachment means provided on the safety belt arrangement 250, such as any position where the belt parts 254 abuts the infant harness means 210.

With reference to Figure 2c, which is a schematic overview, an alternative design of the infant harness means 210 will now be described in accordance with an alternative exemplifying embodiment. This exemplifying embodiment is related to some above described embodiments and the corresponding reference numbers will be applied where appropriate.

The figure illustrates the first side of the infant harness means 210, i.e. the side which will abut against the infant's body. The infant harness means 210 comprises two tabs 216, 220 extending from a middle portion 212, where a first tab 220 is provided with a hole and a second tab 216 corresponds to the leg tab 216, which has been described above in another exemplifying embodiment. The size of the hole will be selected such that the first tab 216 could be slipped over the infant's head when folding the first tab 220 over the infant's shoulders. Similarly, to in the embodiments described above, the tabs 216, 220 are provided with closing means 226, 230 on a second side, which is indicated in the figure with dotted lines.

Additionally, any of the infant harness means 210 according to the described embodiments above may be provided with sensors 234, as seen in figure 2a. Such sensors may be arranged to monitor a medical status of the infant. For instance, sensors 234 may be arranged to monitor: body temperature, oxygen saturation of blood, pulse, breathing, etc. The sensors 234 may be arranged on any suitable side of the first and second sides, or may be arranged within any of the tabs.

Furthermore, the material of which the infant harness means 210 is manufactured may be selected as any suitable material which is soft, resilient and protects the infant's fragile body. Such a material is neoprene. The material may further be covered by textile layers on any of the sides. For instance a flossy flannel layer may cover a first side to be attached to the body and a more robust textile may cover a second side to protect the neoprene layer against damages. By covering the first side with flannel, a secure attachment of the closing means 224, 226, 228, 230 to the first side of the tabs 214, 216, 218, 220 will be achieved.

It is also to be noted that even if the figures 2a-c illustrates that the closing means 224, 226, 228, 230 are arranged at the ends of the tabs 214, 216, 218, 220, the closing means may be arranged at any suitable positions of the tabs. For instance, further closing means may be arranged at the tabs closer to the middle part, which enables the infant harness means 210 to be further adjusted to fit to different infant body sizes.

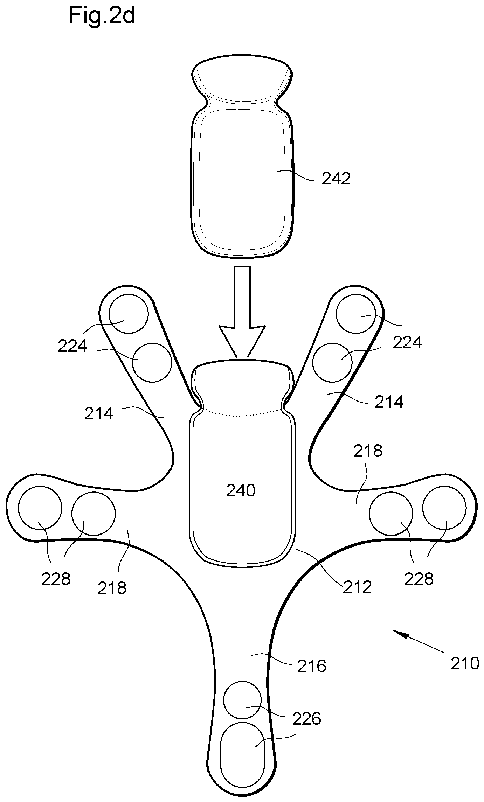

With reference to Figure 2d, which is a schematic overview, the infant harness means 210 will be described

In the figure is the side of the infant harness means 210 viewed which will be the outside when the tabs are folded around the infant. In this embodiment the infant harness means 210 is equipped with a pocket 240 which is arranged to hold a neck stabilizer 242, when introduced in an opening of the pocket 240. The neck stabilizer 242 is arranged to support the infant's head during transport. As known the neck is weak at infants and is not able to support the infant's head which is relatively heavy compared to the infant's body. When transporting infants in vehicles supporting the neck is of particular relevance. In addition, the neck stabilizer 242 may also be designed to support the back of the infant when inserted into the pocket 240.

The neck stabilizer 242 is manufactured of hard plastics. However, the neck stabilizer 242 may be manufactured of alternative materials, such as various plastic materials, metals, or composites, within the disclosed concept. It is also to be noted that the disclosed concept is not limited to a use of one specific material, and that any other suitable material or combination of materials may alternatively be applied for manufacturing the neck stabilizer 242 when appropriate, e.g. carbon fibres or aluminium. It is also to be noted that even if the pocket 240 is placed at the outside of the infant harness means 210, the disclosed concept is not limited thereto. A designer may select to place the pocket 240 alternatively, e.g. on the inside of the infant harness means 210 and with appropriately arranged opening. The closing means 224, 226, 228 are designed with alternative forms in this embodiment compared. For illustrative purposes, the harness attachment means 232 is omitted in the figure. However, when put into practice, the harness attachment means 232 may typically be arranged on the outside of the pocket 240.

With reference to Figure 3, which is a schematic view, an infant protection arrangement 200 will now be described, in accordance to one exemplifying embodiment.

The infant protection arrangement 200 comprises an infant harness means 210 and a safety belt arrangement means 250. As seen in the figure, the infant harness means 210 with closed tabs is attached to the safety belt arrangement 250. Both the infant harness means 210 and the safety belt arrangement means 250 have been disclosed above in other embodiments and will therefore not be further discussed herein.

In addition, the infant protection arrangement 200 may further comprise a protection coverage 270, to cover and protect the infant's body.

With reference to Figure 4, which is a schematic view, such a protection coverage 270 will now be described, in accordance to one exemplifying embodiment.

To enable the understanding, the safety belt arrangement is omitted in the figure. In the figure, the infant harness means 210 is illustrated, but because the infant harness means 210 have been disclosed above in other embodiments it will not be further discussed. The protection coverage 270 is arranged between the infant harness means 210 and the safety belt arrangement 250 to protect the infant. As seen in the figure, the protection coverage 270 partly encloses the infant harness means 210. When the protection coverage 270 is arranged at the infant harness means 210, the infant's body will be covered by the protection coverage, and will thereby be protected from being injured, e.g. from belt parts 254 and belt attachment parts 252. Moreover, by manufacturing the protection coverage 270 of an isolating material, the body temperature of the infant may be kept normal during the transport. In this embodiment, the protection coverage is manufactured of neoprene, which is as well resilient and isolating and protects the infant from being squeezed of cooled. However, any other suitable isolating material may be selected within the described concept.

Furthermore, a designer may select to manufacture the protection coverage 270 of a temperature regulating material for, such as PCM (Phase Change Material), or an energy recovering material, such as energear™, to provide a suitable inner environment for the infant. By selecting an appropriate isolating, temperature regulating and/or energy recovering material, the infant protection arrangement may be applied also for transporting neonatal infants, which may replace complex incubator transports.

In an alternative embodiment, which is based on the one described above, the protection coverage 270 may be covered with a soft material on the side which will abut the infant, and a more robust layer on the other side. Furthermore, a temperature isolating layer may be arranged at any of the two sides. By providing an aluminium film on the second side the isolating characteristics of the protection coverage will be further increased. Moreover, an attachment means may be arranged on the second side of the protective coverage 270 to attach to a corresponding attachment means of the safety belt arrangement 250. Thereby the protection coverage 270 will be more reliably attached to the safety belt arrangement 250. It is also to be noted that the protection coverage 270 may be provided with a pocket (not shown) on the outside, wherein the pocket is arranged to at least partly receive a neck stabilizer when inserted in the pocket. The neck stabilizer is intended to support the neck of the infant during transport and has been described above in another embodiment and in conjunction with figure 2d, and will therefore not be further discussed within this description.

As stated above, the safety belt arrangement 250 may be alternatively implemented within the disclosed concept.

With reference to Figure 5, which is a schematic overview, a scenario where an infant is transported in a vehicle will now be described in accordance with one exemplifying embodiment. This embodiment is related to the embodiment described above in conjunction with figure 1 and the corresponding reference numbers have been applied when appropriate.

In a vehicle a person 100 and an infant 130 are transported, e.g. a newborn infant and its newly delivered mother are transported in an ambulance. The person 100 is seated on a stretcher 110 and fastened to the stretcher with a seat belt 120 of the stretcher 110. The infant 130 is encompassed in an infant harness means 210 and is secured to the body of the person 100 by a safety belt arrangement means 250 which is connected to the seat belt 120 of the person. The safety belt arrangement means 250 comprises four belt attachment parts 252 which are fastened to different respective positions of the seat belt 120. In this exemplifying embodiment, the safety belt arrangement means 250 further comprises a fifth belt attachment part 252 which is connected to a lap belt. The lap belt is fastened to the stretcher 110 at two positions and fixates the person's 100 legs to the stretcher 110. By arranging the fifth belt attachment part 252 and the lap belt the safety belt arrangement 250 will secure the infant 130 further to the person 100 on which it is transported, which increases security further in exceptional driving situations. Also in this embodiment the safety belt arrangement 250 further comprises a plurality of belt parts 254, which interconnects the five belt attachment parts 252. In this embodiment, the three lower belt attachment parts 252 in the figure are connected via respective belt parts 254 to a quick-release buckle 256, and the two upper belt attachment parts are connected directly to the quick-release buckle 256. This arrangement enables medical personal to release the infant almost immediately from the person 100 without removing the belt attachment parts 252, by pushing a button on the quick-release buckle 256. This could be important in emergency situations, especially if the infant needs intensive care, e.g. the infant stops breathing.

However, the disclosed concept is not limited thereto, and a designer may select to implement the safety belt arrangement 250 with a suitable number of belt attachment parts 252 and belt parts 254 interconnecting the belt attachment parts 252. Furthermore, the designer may select to interconnect the belt attachment parts 252 directly via the belt parts 254 or via a quick-release buckle 256.

In one alternative embodiment he/she may select to connect the five belt attachment parts 252 directly to the quick-release buckle 256. This alternative embodiment enables then use of five identical belt attachment parts 252 without interconnecting belt parts 254, which could be of particular relevance in stressed situations when the medical personal don't have to consider which belt attachment parts 252 to arrange at the different positions of the persons safety belt 120 or the lap belt.

The belt parts 254 are provided with respective buckles arranged to connect to respective ones of the belt attachment parts 252, and the quick-release buckle 256 is arranged to connect to the remaining belt attachment parts 252. By manufacturing the belt parts and the belt attachment parts of the same material as conventional seat belts, the infant may be securely and reliable fastened to the person's body during transport. As seen in the figure, the infant 130 is provided with a head cap. The head cap may assist the infant with keeping the body temperature and moisture. In addition the head cap may protect the infant from being injured by the buckles etc.

The safety belt attachment means 250 of the above described embodiments may further comprise adjustment buckles to adjust the size of the safety belt attachment means 250 to the size of the infant 130. Such adjustment buckles may be arranged at any appropriate of the belt parts 254 or the belt attachment parts 252.

As stated above in conjunction with another embodiment, a designer may select to apply the infant harness means and safety belt attachment means also in other types of vehicles.

Reference throughout the specification to "one embodiment" or "an embodiment" is used to mean that a particular feature, structure or characteristic described in connection with an embodiment is included in at least one embodiment. Thus, the appearance of the expressions "in one embodiment" or "in an embodiment" in various places throughout the specification are not necessarily referring to the same embodiment. Further, the particular features, structures or characteristics may be combined in any suitable manner in one or several embodiments. Although the present invention has been described above with reference to specific embodiments, it is not intended to be limited to the specific form set forth herein. Rather, the invention is limited only by the accompanying claims and other embodiments than the specific above are equally possible within the scope of the appended claims. Moreover, it should be appreciated that the terms "comprise/comprises" or "include/includes", as used herein, do not exclude the presence of other elements or steps. Furthermore, although individual features may be included in different claims, these may possibly advantageously be combined, and the inclusion of different claims does not imply that a combination of features is not feasible and/or advantageous. In addition, singular references do not exclude a plurality. Finally, reference signs in the claims are provided merely as a clarifying example and should not be construed as limiting the scope of the claims in any way.

The scope is generally defined by the following independent claims. Exemplifying embodiments are defined by the dependent claims.

## Claims

1. An infant harness means (210) to be attached to a safety belt arrangement (250) for enabling vehicle transport of an infant (130) on a persons (100) body when the person (100) is seated in a seat or a stretcher (110) of a vehicle, such as an ambulance, and is fastened to the seat or stretcher (110) with a seat belt (120), the infant harness means (210) comprising:
• a middle portion (212),
• at least a first and a second tab (214, 216, 218, 220) extending from the middle portion (212), and being adapted to at least partly encompass the body of the infant when folded around the body of the infant, and an end part of the first tab (214, 216, 218, 220) is fixated to an end part of the second tab (214, 216, 218, 220), wherein; in use of the infant harness means, the infant is placed on its back on the middle portion (212) and the tabs (214, 216, 218, 220) are folded around the body of the infant, and;
• a harness attachment means (232) arranged on a first side of the infant harness means (210), for attachment of the infant harness means (210) to a corresponding attachment means of the safety belt arrangement (250), the safety belt arrangement means (250) being adapted to be connectable to the seat belt (120) of the person (100) being seated in the seat or stretcher (110), **characterized in that;** the infant harness means (210) comprises a pocket (240) arranged to receive at least a part of a neck stabilizer (242) when inserted, such that the neck of the infant (130) is supported by the neck stabilizer (242) when the infant harness means (210) is at least partly encompassing the body of the infant (130).

2. The infant harness means (210) according to claim 1, wherein the first side is the outside of the infant harness means (210) when the at least first and second tabs (214, 216, 218, 220) are folded around the body of the infant (130).

3. The infant harness means (210) according to claim 1 or 2, wherein the at least first and second tab (214, 216, 218, 220) are: at least one shoulder tab (214, 220), a leg tab (216), and at least one side tab (218), and the at least one shoulder tab (214, 220) is adapted to be folded over the infant's shoulders, the leg tab (216) is adapted to be folded between the infant's legs, and the side tab (218) is adapted to be folded over the infant's torso.

4. The infant harness means (210) according to claim 1 or 2, wherein each of the at least first and second tabs (214, 216, 218, 220) comprises a respective closing means (224, 226, 228, 230) arranged such that the at least first and second tabs (214, 216, 218, 220) are fixated to each other when the at least first and second tabs (214, 216, 218, 220) are folded around the body of the infant.

5. The infant harness means (210) according to claim 1 or 2, wherein the attachment means (232) is provided on at least one of the middle part (212) and the at least first and second tabs (214, 216, 218).

6. An infant protection arrangement (200) comprising the infant harness means (210) according to anyone of claims 1 to 5 and further comprising a safety belt arrangement (250), the safety belt arrangement (250) comprising at least two belt attachment parts (252) being interconnected by at least one belt part (254), such that the safety belt arrangement (250) secures the infant (130) to the body of the person, when the belt attachment parts (252) are attached to different positions of the seat belt (120) and the belt part (254) is guided over the infant harness means (210).

7. The infant protection arrangement (200) according to claim 6, further comprising a protection coverage (270) adapted to be arranged between the infant harness means (210) and the safety belt arrangement (250), such that the protection coverage (270) at least partly encloses the infant harness means (210) and the infant (130).

8. The infant protection arrangement (200) according to claim 7, wherein the protection coverage (270) comprises a first attachment means arranged on a first side of the protection coverage (270) and a second attachment means arranged on a second side of the protection coverage (270), such that the first attachment means is attached to the harness attachment means (232) and the second attachment means is attached to the corresponding attachment means of the safety belt arrangement (250), when the protection coverage (270) is arranged between the infant harness means (210) and the safety belt arrangement (250).

9. The infant protection arrangement (200) according to any of claims 6 to 8, wherein the safety belt arrangement (250) comprises four belt attachment parts (252), at least two further belt parts (254) and a quick-release buckle (256), the belt attachment parts (252) being interconnected via the quick-release buckle (256) and the belt parts (254), such that the infant harness means (210) could be released from the seat belt (120) by opening the quick-release buckle (256).

## Patentansprüche

1. Kleinkindgurtmittel (210), das an einer Sicherheitsgurtanordnung (250) befestigt wird, um den Fahrzeugtransport eines Kleinkindes (130) am Körper einer Person (100) zu ermöglichen, wenn die Person (100) in einem Sitz sitzt oder auf einer Liege (110) eines Fahrzeugs liegt, wie beispielsweise einem Krankenwagen, und mit einem Sicherheitsgurt (120) am Sitz oder der Liege (110) befestigt ist, wobei das Kleinkindgurtmittel (210) umfasst:
• einen Mittelabschnitt (212),
• mindestens eine erste und eine zweite Lasche (214, 216, 218, 220), die sich vom Mittelabschnitt (212) erstrecken und so eingerichtet sind, dass sie den Körper des Kleinkinds zumindest teilweise umschließen, wenn sie um den Körper des Säuglings gelegt werden, und ein Endabschnitt der ersten Lasche (214, 216, 218, 220) ist an einem Endabschnitt der zweiten Lasche (214, 216, 218, 218, 220) befestigt, wobei bei Verwendung des Kleinkindgurtmittels das Kleinkind mit seinem Rücken auf dem Mittelabschnitt (212) platziert wird und die Laschen (214, 216, 218, 218, 220) um den Körper des Kleinkinds gelegt werden, und
• ein Gurtbefestigungsmittel (232), das auf einer ersten Seite des Kleinkindgurtmittels (210) angeordnet ist, zum Befestigen des Kleinkindgurtmittels (210) an einem entsprechenden Befestigungsmittel der Sicherheitsgurtanordnung (250), wobei das Sicherheitsgurtanordnungsmittel (250) so ausgebildet sind, dass es mit dem Sicherheitsgurt (120) der Person (100), die in dem Sitz sitzt oder auf der Liege (110) liegt, verbunden werden kann, **dadurch gekennzeichnet, dass** das Kleinkindgurtmittel (210) eine Tasche (240) umfasst, die so angeordnet ist, dass sie mindestens einen Teil eines Halsstabilisators (242) beim Einsetzen aufnimmt, so dass der Hals des Kleinkinds (130) durch den Halsstabilisator (242) gestützt wird, wenn das Kleinkindgurtmittel (210) zumindest teilweise den Körper des Kleinkindes (130) umfasst.

2. Kleinkindgurtmittel (210) nach Anspruch 1, wobei die erste Seite die Außenseite des Kleinkindgurtmittels (210) ist, wenn die mindestens erste und zweite Laschen (214, 216, 218, 220) um den Körper des Kleinkinds (130) gelegt werden.

3. Kleinkindgurtmittel (210) nach Anspruch 1 oder 2, wobei die mindestens erste und zweite Lasche (214, 216, 218, 220) sind: mindestens eine Schulterlasche (214, 220), eine Beinlasche (216) und mindestens eine Seitenlasche (218), und die mindestens eine Schulterlasche (214, 220) eingerichtet ist, über die Schultern des Kleinkinds gelegt zu werden, die Beinlasche (216) eingerichtet ist, zwischen den Beinen des Säuglings gelegt zu werden, und die Seitenlasche (218) eingerichtet ist, über den Torso des Kleinkinds gelegt zu werden.

4. Kleinkindgurtmittel (210) nach Anspruch 1 oder 2, wobei jede der mindestens ersten und zweiten Laschen (214, 216, 218, 218, 220) ein entsprechendes Schließmittel (224, 226, 228, 230) umfasst, das so angeordnet ist, dass die mindestens ersten und zweiten Laschen (214, 216, 218, 220) aneinander befestigt sind, wenn die mindestens ersten und zweiten Laschen (214, 216, 218, 218, 220) um den Körper des Kleinkinds gelegt sind.

5. Kleinkindgurtmittel (210) nach Anspruch 1 oder 2, wobei das Befestigungsmittel (232) an mindestens einem Mittelabschnitt (212) und den mindestens ersten und zweiten Laschen (214, 216, 218) bereitgestellt wird.

6. Kleinkindschutzanordnung (200), umfassend das Kleinkindgurtmittel (210) nach einem der Ansprüche 1 bis 5 und ferner umfassend eine Sicherheitsgurtanordnung (250), wobei die Sicherheitsgurtanordnung (250) mindestens zwei Gurtbefestigungsteile (252) umfasst, die durch mindestens ein Gurtteil (254) verbunden sind, so dass die Sicherheitsgurtanordnung (250) das Kleinkind (130) am Körper der Person sichert, wenn die Gurtbefestigungsteile (252) an verschiedenen Stellen des Sicherheitsgurtes (120) befestigt sind und das Gurtteil (254) über das Kleinkindgurtmittel (210) geführt wird.

7. Kleinkindschutzanordnung (200) nach Anspruch 6, ferner umfassend eine Schutzabdeckung (270), die eingerichtet ist um zwischen dem Kleinkindgurtmittel (210) und der Sicherheitsgurtanordnung (250) angeordnet zu werden, so dass die Schutzabdeckung (270) das Kleinkindgurtmittel (210) und das Kleinkind (130) zumindest teilweise umschließt.

8. Kleinkindschutzanordnung (200) nach Anspruch 7, wobei die Schutzabdeckung (270) ein erstes Befestigungsmittel, das auf einer ersten Seite der Schutzabdeckung (270) angeordnet ist, und ein zweites Befestigungsmittel, das auf einer zweiten Seite der Schutzabdeckung (270) angeordnet ist, umfasst, so dass das erste Befestigungsmittel an dem Gurtbefestigungsmittel (232) befestigt ist und das zweite Befestigungsmittel an dem entsprechenden Befestigungsmittel der Sicherheitsgurtanordnung (250) befestigt ist, wenn die Schutzabdeckung (270) zwischen dem Kleinkindgurtmittel (210) und der Sicherheitsgurtanordnung (250) angeordnet ist.

9. Kleinkindschutzanordnung (200) nach einem der Ansprüche 6 bis 8, wobei die Sicherheitsgurtanordnung (250) vier Gurtbefestigungsteile (252), mindestens zwei weitere Gurtteile (254) und einen Schnellverschluss (256) umfasst, die Gurtbefestigungsteile (252) über den Schnellverschluss (256) und die Gurtteile (254) miteinander verbunden sind, so dass das Kleinkindgurtmittel (210) durch Öffnen des Schnellverschlusses (256) vom Sicherheitsgurt (120) gelöst werden können.

## Revendications

1. Moyen de harnais pour bébé (210) à attacher à un agencement de ceinture de sécurité (250) pour permettre le transport, dans un véhicule, d'un bébé (130) sur le corps d'une personne (100) lorsque la personne (100) est assise sur un siège ou un brancard (110) d'un véhicule, tel qu'une ambulance, et est attachée sur le siège ou le brancard (110) avec une ceinture de sécurité (120), le moyen de harnais pour bébé (210) comprenant :
• une portion centrale (212),
• au moins une première et une deuxième sangles (214, 216, 218, 220) s'étendant depuis la portion centrale (212), et étant aptes à entourer au moins partiellement le corps du bébé lorsqu'elles sont pliées autour du corps du bébé, et une partie d'extrémité de la première sangle (214, 216, 218, 220) est fixée à une partie d'extrémité de la deuxième sangle (214, 216, 218, 220), dans lequel ;
au cours de l'utilisation du moyen de harnais pour bébé, le bébé est placé sur son dos sur la portion centrale (212) et les sangles (214, 216, 218, 220) sont pliées autour du corps du bébé, et
• un moyen d'attache de harnais (232) agencé sur un premier côté du moyen de harnais pour bébé (210), pour attacher le moyen de harnais pour bébé (210) à un moyen d'attache correspondant de l'agencement de ceinture de sécurité (250), le moyen d'agencement de ceinture de sécurité (250) étant apte à être raccordé à la ceinture de sécurité (120) de la personne (100) qui est assise sur le siège ou brancard (110), **caractérisé en ce que** ; le moyen de harnais pour bébé (210) comprend une poche (240) agencée pour recevoir au moins une partie d'un stabilisateur de cou (242) lorsqu'il est inséré, de sorte que le cou du bébé (130) soit supporté par le stabilisateur de cou (242) lorsque le moyen de harnais pour bébé (210) entoure au moins partiellement le corps du bébé (130).

2. Moyen de harnais pour bébé (210) selon la revendication 1, dans lequel le premier côté est l'extérieur du moyen de harnais pour bébé (210) lorsque les au moins première et deuxième sangles (214, 216, 218, 220) sont pliées autour du corps du bébé (130).

3. Moyen de harnais pour bébé (210) selon la revendication 1 ou 2, dans lequel les au moins première et deuxième sangles (214, 216, 218, 220) sont : au moins une sangle d'épaule (214, 220), une sangle de jambe (216), et au moins une sangle latérale (218), et l'au moins une sangle d'épaule (214, 220) est apte à être pliée sur les épaules du bébé, la sangle de jambe (216) est apte à être pliée entre les jambes du bébé, et la sangle latérale (218) est apte à être pliée sur le torse du bébé.

4. Moyen de harnais pour bébé (210) selon la revendication 1 ou 2, dans lequel chacune des au moins première et deuxième sangles (214, 216, 218, 220) comprend un moyen de fermeture respectif (224, 226, 228, 230) agencé de sorte que les au moins première et deuxième sangles (214, 216, 218, 220) soient fixées l'une à l'autre lorsque les au moins première et deuxième sangles (214, 216, 218, 220) sont pliées autour du corps du bébé.

5. Moyen de harnais pour bébé (210) selon la revendication 1 ou 2, dans lequel le moyen d'attache (232) est prévu sur au moins l'une de la partie centrale (212) et des au moins première et deuxième sangles (214, 216, 218).

6. Agencement de protection pour bébé (200) comprenant le moyen de harnais pour bébé (210) selon l'une quelconque des revendications 1 à 5 et comprenant en outre un agencement de ceinture de sécurité (250), l'agencement de ceinture de sécurité (250) comprenant au moins deux parties d'attache de ceinture (252) qui sont interconnectées par au moins une partie de ceinture (254), de sorte que l'agencement de ceinture de sécurité (250) maintienne bien le bébé (130) sur le corps de la personne, lorsque les parties d'attache de ceinture (252) sont attachées à différentes positions de la ceinture de sécurité (120) et la partie de ceinture (254) est guidée sur le moyen de harnais pour bébé (210).

7. Agencement de protection pour bébé (200) selon la revendication 6, comprenant en outre une couverture de protection (270) apte à être agencée entre le moyen de harnais pour bébé (210) et l'agencement de ceinture de sécurité (250), de sorte que la couverture de protection (270) entoure au moins partiellement le moyen de harnais pour bébé (210) et le bébé (130).

8. Agencement de protection pour bébé (200) selon la revendication 7, dans lequel la couverture de protection (270) comprend un premier moyen d'attache agencé sur un premier côté de la couverture de protection (270) et un deuxième moyen d'attache agencé sur un deuxième côté de la couverture de protection (270), de sorte que le premier moyen d'attache soit attaché au moyen d'attache de harnais (232) et le deuxième moyen d'attache soit attaché au moyen d'attache correspondant de l'agencement de ceinture de sécurité (250), lorsque la couverture de protection (270) est agencée entre le moyen de harnais pour bébé (210) et l'agencement de ceinture de sécurité (250).

9. Agencement de protection pour bébé (200) selon l'une quelconque des revendications 6 à 8, dans lequel l'agencement de ceinture de sécurité (250) comprend quatre parties d'attache de ceinture (252), au moins deux autres parties de ceinture (254) et une boucle à libération rapide (256), les parties d'attache de ceinture (252) étant interconnectées par l'intermédiaire de la boucle à libération rapide (256) et les parties de ceinture (254), de sorte que le moyen de harnais pour bébé (210) puisse être libéré de la ceinture de sécurité (120) par l'ouverture de la boucle à libération rapide (256).
